# EUROPEAN PATENT APPLICATION

(11) **EP 4 117 088 A1**
(43) Date of publication of application: **11.01.2023**
(21) Application number: 21765304.7
(22) Date of filing: 01.03.2021
(51) Int. Cl.: H01M 10/613, H01M 10/647, H01M 10/658, F16L 59/02, H01M 50/10

(54) **HEAT INSULATING MATERIAL FOR BATTERY AND BATTERY**

(30) Priority: 06.03.2020 JP 2020038584
(71) Applicant: Nichias Corporation, Tokyo 104-8555 (JP)
(72) Inventor: ONUKI, Toshifumi, Tokyo 104-8555 (JP); KODA, Shota, Tokyo 104-8555 (JP); ANDO, Daisuke, Tokyo 104-8555 (JP)
(74) Representative: Winter, Brandl - Partnerschaft mbB
(86) International application number: PCT/JP2021/007629
(87) International publication number: WO 2021/177205

(57) **Abstract**

Provided are a heat insulating material for a battery having appropriate deformability and a battery including the heat insulating material. The heat insulating material for a battery is a heat insulating material for a battery, which is arranged so as to cover a surface included in a battery, the heat insulating material for a battery including: a heat insulating portion that is arranged so as to face the surface of the battery; and a buffering portion that is more deformable by compression than the heat insulating portion, wherein at least part of the buffering portion is arranged at a position closer to the surface of the battery than the heat insulating portion.

## Description

### Technical Field

The present invention relates to a heat insulating material for a battery and a battery.

### Background Art

In Patent Literature 1, there are descriptions that, when a heat insulating material including: a composite layer containing a fiber and a silica aerogel; and a resin column arranged in a thickness direction in the composite layer is used between battery cells, a compressive stress applied to the silica aerogel in the heat insulating material can be dispersed by the resin column, to thereby enable long-term retention of heat insulating properties between the battery cells, with the result that fire propagation due to thermal runaway between the battery cells can be suppressed, and a safe battery for a vehicle can be provided, that the resin column having heat insulating properties is formed of a porous resin, and that a fluororesin, polystyrene, polypropylene, polyethylene, or the like is used as the material for the resin column.

### Citation List

### Patent Literature

[PTL 1] JP 2017-215014 A

### Summary of Invention

### Technical Problem

However, when the heat insulating material has poor deformability, for example, a defect may occur due to that the deformation of a surface of a battery covered with the heat insulating material is excessively suppressed and/or that the followability of the heat insulating material to the surface of the battery is poor.

The present invention has been made in view of the above-mentioned problem, and one of the objects of the present invention is to provide a heat insulating material for a battery having appropriate deformability and a battery including the heat insulating material.

### Solution to Problem

In order to solve the above-mentioned problem, according to one embodiment of the present invention, there is provided a heat insulating material for a battery, which is arranged so as to cover a surface included in a battery, the heat insulating material for a battery including: a heat insulating portion that is arranged so as to face the surface of the battery; and a buffering portion that is more deformable by compression than the heat insulating portion, wherein at least part of the buffering portion is arranged at a position closer to the surface of the battery than the heat insulating portion. According to the present invention, the heat insulating material for a battery having appropriate deformability is provided.

In addition, a compressive modulus of elasticity of the buffering portion may be smaller than a compressive modulus of elasticity of the heat insulating portion. In addition, a compressive stress of the buffering portion under compressive strain of 10% may be smaller than a compressive stress of the heat insulating portion under compressive strain of 10%. In addition, a thermal conductivity of the heat insulating portion at 23°C may be smaller than a thermal conductivity of the buffering portion at 23°C. In addition, the heat insulating portion and the buffering portion may be arranged so as to form a sea-island structure in plan view of the heat insulating material.

In addition, the heat insulating portion may be a porous body. In this case, the heat insulating portion may be a press-formed body of powder. In addition, the heat insulating portion may be a fiber body. In addition, the buffering portion may be a fiber body. In addition, the buffering portion may be an elastomer formed body. In addition, the buffering portion may be a metal spring.

In order to solve the above-mentioned problem, according to one embodiment of the present invention, there is provided a battery, including the heat insulating material according to any one of the above-mentioned embodiments. According to the present invention, the battery including the heat insulating material for a battery having appropriate deformability is provided.

In addition, the battery may further include a pair of cells arranged adjacent to each other, wherein the heat insulating material is arranged between the pair of cells.

### Advantageous Effects of Invention

According to the present invention, a heat insulating material for a battery having appropriate deformability and a battery including the heat insulating material are provided.

### Brief Description of Drawings

FIG. 1A is an explanatory view for schematically illustrating a cross section of an example of a battery according to one embodiment of the present invention.
FIG. 1B is an explanatory view for schematically illustrating a cross section of an example of a heat insulating material for a battery according to one embodiment of the present invention.
FIG. 1C is an explanatory view for schematically illustrating a cross section of another example of the battery according to the one embodiment of the present invention.
FIG. 2A is an explanatory view for schematically illustrating a cross section of an example of the heat insulating material for a battery according to the one embodiment of the present invention.
FIG. 2B is an explanatory view for schematically illustrating a cross section of another example of the heat insulating material for a battery according to the one embodiment of the present invention.
FIG. 3A is an explanatory view for schematically illustrating a cross section of an example of the battery according to the one embodiment of the present invention.
FIG. 3B is an explanatory view for schematically illustrating a cross section of an example of the heat insulating material for a battery according to the one embodiment of the present invention.
FIG. 4A is an explanatory view for schematically illustrating an example of the heat insulating material for a battery according to the one embodiment of the present invention in plan view.
FIG. 4B is an explanatory view for schematically illustrating an example of a cross section of the heat insulating material for a battery taken along the line IV-IV of FIG. 4A.
FIG. 4C is an explanatory view for schematically illustrating a cross section of a battery including the heat insulating material for a battery illustrated in FIG. 4A and FIG. 4B.
FIG. 5A is an explanatory view for schematically illustrating an example of the heat insulating material for a battery according to the one embodiment of the present invention in plan view.
FIG. 5B is an explanatory view for schematically illustrating an example of a cross section of the heat insulating material for a battery taken along the line V-V of FIG. 5A.
FIG. 5C is an explanatory view for schematically illustrating a cross section of a battery including the heat insulating material for a battery illustrated in FIG. 5A and FIG. 5B.
FIG. 5D is an explanatory view for schematically illustrating another example of the cross section of the heat insulating material for a battery taken along the line V-V of FIG. 5A.
FIG. 5E is an explanatory view for schematically illustrating still another example of the cross section of the heat insulating material for a battery taken along the line V-V of FIG. 5A.
FIG. 6A is an explanatory view for schematically illustrating an example of the heat insulating material for a battery according to the one embodiment of the present invention in plan view.
FIG. 6B is an explanatory view for schematically illustrating an example of a cross section of the heat insulating material for a battery taken along the line VI-VI of FIG. 6A.
FIG. 6C is an explanatory view for schematically illustrating another example of the cross section of the heat insulating material for a battery taken along the line VI-VI of FIG. 6A.
FIG. 6D is an explanatory view for schematically illustrating still another example of the cross section of the heat insulating material for a battery taken along the line VI-VI of FIG. 6A.
FIG. 7A is an explanatory view for schematically illustrating an example of the heat insulating material for a battery according to the one embodiment of the present invention in plan view.
FIG. 7B is an explanatory view for schematically illustrating an example of a cross section of the heat insulating material for a battery taken along the line VII-VII of FIG. 7A.
FIG. 8A is an explanatory view for schematically illustrating an example of the heat insulating material for a battery according to the one embodiment of the present invention in plan view.
FIG. 8B is an explanatory view for schematically illustrating an example of a cross section of the heat insulating material for a battery taken along the line VIII-VIII of FIG. 8A.
FIG. 8C is an explanatory view for schematically illustrating another example of the cross section of the heat insulating material for a battery taken along the line VIII-VIII of FIG. 8A.
FIG. 8D is an explanatory view for schematically illustrating still another example of the cross section of the heat insulating material for a battery taken along the line VIII-VIII of FIG. 8A.
FIG. 8E is an explanatory view for schematically illustrating still another example of the cross section of the heat insulating material for a battery taken along the line VIII-VIII of FIG. 8A.
FIG. 8F is an explanatory view for schematically illustrating still another example of the cross section of the heat insulating material for a battery taken along the line VIII-VIII of FIG. 8A.
FIG. 8G is an explanatory view for schematically illustrating still another example of the cross section of the heat insulating material for a battery taken along the line VIII-VIII of FIG. 8A.
FIG. 8H is an explanatory view for schematically illustrating still another example of the cross section of the heat insulating material for a battery taken along the line VIII-VIII of FIG. 8A.
FIG. 8I is an explanatory view for schematically illustrating still another example of the cross section of the heat insulating material for a battery taken along the line VIII-VIII of FIG. 8A.
FIG. 8J is an explanatory view for schematically illustrating still another example of the cross section of the heat insulating material for a battery taken along the line VIII-VIII of FIG. 8A.
FIG. 8K is an explanatory view for schematically illustrating still another example of the cross section of the heat insulating material for a battery taken along the line VIII-VIII of FIG. 8A.
FIG. 8L is an explanatory view for schematically illustrating still another example of the cross section of the heat insulating material for a battery taken along the line VIII-VIII of FIG. 8A.
FIG. 8M is an explanatory view for schematically illustrating still another example of the cross section of the heat insulating material for a battery taken along the line VIII-VIII of FIG. 8A.

### Description of Embodiments

An embodiment of the present invention will be described below. The present invention is not limited to the examples shown in this embodiment.

A heat insulating material for a battery according to this embodiment (hereinafter referred to as "heat insulating material") is a heat insulating material for a battery, which is arranged so as to cover a surface included in a battery, the heat insulating material for a battery including: a heat insulating portion that is arranged so as to face the surface of the battery; and a buffering portion that is more deformable by compression than the heat insulating portion, wherein at least part of the buffering portion is arranged at a position closer to the surface of the battery than the heat insulating portion. In addition, a battery according to this embodiment includes the above-mentioned heat insulating material.

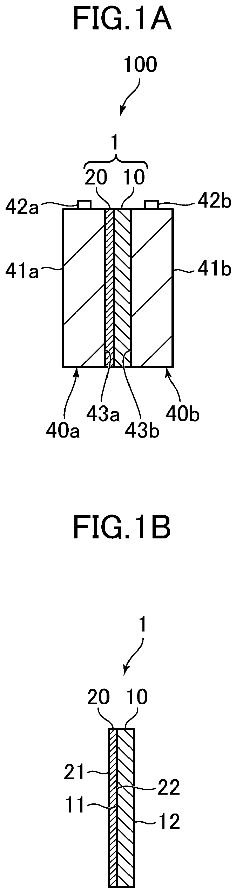

The surface of the battery on which the heat insulating material is arranged is not particularly limited as long as the surface is a surface included in the battery, but in this description, an example will be mainly described, where a battery 100 includes a pair of cells 40a and 40b arranged adjacent to each other and a heat insulating material 1 is arranged between the pair of cells 40a and 40b as illustrated in FIG. 1A.

The battery 100 including the pair of cells 40a and 40b arranged adjacent to each other is, for example, a so-called stack-type battery. That is, the battery 100 includes a stack, the stack includes a plurality of cells arranged in a stacked manner, and the plurality of cells include the pair of cells 40a and 40b arranged adjacent to each other.

The battery 100 is not particularly limited, but for example, may be a secondary battery or a fuel cell. The secondary battery is not particularly limited, but for example, may be a lithium ion secondary battery, a nickel hydrogen secondary battery, a sodium ion secondary battery, a potassium ion secondary battery, a lithium sulfur secondary battery, a polyvalent metal secondary battery, a lithium air secondary battery, a sodium air secondary battery, a zinc air secondary battery, or a hydrogen air secondary battery. The fuel cell is not particularly limited, but for example, may be a polymer electrolyte fuel cell, a phosphoric acid fuel cell, a molten carbonate fuel cell, a solid oxide fuel cell, an alkali electrolyte fuel cell, a direct fuel cell, a biofuel cell, or an air cell. The battery 100 may be one installed in a vehicle such as an automobile.

The shape of each cell 40a,40b is not particularly limited, but may be a plate shape as illustrated in FIG. 1A. Each cell 40a,40b includes: housings 41a and 41; and a positive electrode, a negative electrode, and an electrolyte (not shown) housed in the housing 41a, 41b. In this case, each cell 40a, 40b may include: the housing 41a, 41b; and a positive electrode, a negative electrode, a separator, and an electrolyte (not shown) housed in the housing 41a, 41b. In each housing 41a, 41b, a terminal 42a,42b is formed. Moreover, as illustrated in FIG. 1A, a surface 43a of one housing 41a and a surface 43b of the other housing 41b are arranged so as to face each other.

The heat insulating material 1 is arranged in the battery 100 in order to thermally insulate the surfaces 43a and 43b facing each other of the pair of cells 40a and 40b. That is, the heat insulating material 1 is sandwiched between the pair of cells 40a and 40b. As a result, the heat insulating material 1 is arranged so as to cover the surfaces 43a and 43b facing each other of the pair of cells 40a and 40b.

The heat insulating material 1 includes a heat insulating portion 10 and a buffering portion 20 that is more deformable by compression than the heat insulating portion 10. In an example illustrated in FIG. 1B, the buffering portion 20 is stacked on the heat insulating portion 10. Specifically, as illustrated in FIG. 1A, the heat insulating material 1 includes: the heat insulating portion 10 arranged so as to face the surface 43a of one cell 40a; and the buffering portion 20 arranged between the heat insulating portion 10 and the surface 43a. That is, in the battery 100, the entirety of the buffering portion 20 is arranged at a position closer to the surface 43a of one cell 40a than the heat insulating portion 10.

Accordingly, for example, when one cell 40a expands owing to its excessive heat generation and the surface 43a of the cell 40a protrudes toward the heat insulating material 1 during the operation of the battery 100, the buffering portion 20, which is more deformable by compression than the heat insulating portion 10, is firstly deformed by compression of the surface 43a. That is, the buffering portion 20, which is more excellent in deformability than the heat insulating portion 10, is deformed while following the deformation of the surface 43a of the cell 40a.

As a result, for example, even when the heat insulating material 1 includes the heat insulating portion 10 which is not very deformable by compression, the occurrence of a defect caused by excessive suppression of the expansion of the cell 40a is effectively prevented.

That is, for example, when excessive heat generation occurs in the cell 40a having the surface 43a covered with the heat insulating material including only the heat insulating portion 10 that is not very deformable by compression, the cell 40a cannot expand toward the heat insulating material, and hence such a defect that the cell 40a is ruptured to be broken may occur.

On the other hand, when the buffering portion 20 that is more deformable by compression than the heat insulating portion 10 is arranged at a position closer to the surface 43a of the cell 40a than the heat insulating portion 10, the surface 43a is allowed to protrude toward the heat insulating portion 10 while deforming the buffering portion 20, and hence the defect described above is effectively avoided.

As described above, the buffering portion 20 of the heat insulating material 1 is a formed body having a characteristic of being more deformable by compression than the heat insulating portion 10 of the heat insulating material 1. That is, for example, strain in the buffering portion 20 at the time of application of a predetermined stress is larger than strain in the heat insulating portion 10 at the time of application of the predetermined stress. In addition, for example, a stress required for generating predetermined strain in the buffering portion 20 is smaller than a stress required for generating the predetermined strain in the heat insulating portion 10.

Specifically, the compressive modulus of elasticity of the buffering portion 20 may be smaller than the compressive modulus of elasticity of the heat insulating portion 10. More specifically, the compressive modulus of elasticity of the buffering portion 20 is smaller than that of the heat insulating portion 10 by preferably 4.5 MPa or more (e.g., 4.5 MPa or more and less than 4.5 GPa) (a difference in compressive modulus of elasticity calculated by subtracting the compressive modulus of elasticity of the buffering portion 20 from the compressive modulus of elasticity of the heat insulating portion 10 is 4.5 MPa or more), more preferably 15 MPa or more (e.g., 15 MPa or more and less than 4.5 GPa), particularly preferably 45 MPa or more (e.g., 45 MPa or more and less than 4.5 GPa).

In addition, the compressive modulus of elasticity of the buffering portion 20 is preferably 50% or less (e.g., 0.1% or more and 50% or less) of the compressive modulus of elasticity of the heat insulating portion 10 (a ratio calculated by multiplying a value calculated by dividing the compressive modulus of elasticity of the buffering portion 20 by the compressive modulus of elasticity of the heat insulating portion 10 by 100 is 50% or less), and is more preferably 25% or less (e.g., 0.1% or more and 25% or less), still more preferably 10% or less (e.g., 0.1% or more and 10% or less), particularly preferably 1% or less (e.g., 0.1% or more and 1% or less) thereof.

In addition, it is appropriate that the compressive modulus of elasticity of the heat insulating portion 10 is 5 MPa or more and 4.5 GPa or less, the compressive modulus of elasticity of the buffering portion 20 is 0.5 MPa or more and 45 MPa or less, and the compressive modulus of elasticity of the buffering portion 20 is 50% or less, 25% or less, 10% or less, or 1% or less of the compressive modulus of elasticity of the heat insulating portion 10. It is preferred that the compressive modulus of elasticity of the heat insulating portion 10 is 10 MPa or more and 3 GPa or less, the compressive modulus of elasticity of the buffering portion 20 is 1 MPa or more and 30 MPa or less, and the compressive modulus of elasticity of the buffering portion 20 is 50% or less, 25% or less, 10% or less, or 1% or less of the compressive modulus of elasticity of the heat insulating portion 10. It is more preferred that the compressive modulus of elasticity of the heat insulating portion 10 is 15 MPa or more and 1.5 GPa or less, the compressive modulus of elasticity of the buffering portion 20 is 1.5 MPa or more and 15 MPa or less, and the compressive modulus of elasticity of the buffering portion 20 is 50% or less, 25% or less, 10% or less, or 1% or less of the compressive modulus of elasticity of the heat insulating portion 10. It is particularly preferred that the compressive modulus of elasticity of the heat insulating portion 10 is 15 MPa or more and 1 GPa or less, the compressive modulus of elasticity of the buffering portion 20 is 1.5 MPa or more and 10 MPa or less, and the compressive modulus of elasticity of the buffering portion 20 is 50% or less, 25% or less, 10% or less, or 1% or less of the compressive modulus of elasticity of the heat insulating portion 10.

The compressive moduli of elasticity and compressive stresses of the heat insulating portion 10 and the buffering portion 20 included in the heat insulating material 1 are each measured by a method in conformity with Method C of "JIS K 6254:2016 Rubber, vulcanized or thermoplastic-Determination of stress-strain properties." As the shape of the test piece, the shapes of the heat insulating portion 10 and the buffering portion 20 included in the heat insulating material 1 are each employed. In addition, a "projected area of the heat insulating material 1 in plan view of the heat insulating material 1" is used as a "sectional area of the test piece" to be used for calculation of the "compressive stresses" of the heat insulating portion 10 and the buffering portion 20, instead of the sectional areas of the heat insulating portion 10 and the buffering portion 20. In addition, the original sizes of the heat insulating portion 10 and the buffering portion 20 are used as "original size of the test piece" to be used for calculation of the "compressive moduli of elasticity" of the heat insulating portion 10 and the buffering portion 20.

The compressive stress of the buffering portion 20 under compressive strain of 10% may be smaller than the compressive stress of the heat insulating portion 10 under compressive strain of 10%. More specifically, the compressive stress of the buffering portion 20 under compressive strain of 10% is smaller than that of the heat insulating portion 10 under compressive strain of 10% by preferably 0.45 MPa or more (e.g., 0.45 MPa or more and less than 450 MPa), more preferably 1.5 MPa or more (e.g., 1.5 MPa or more and less than 450 MPa), particularly preferably 4.5 MPa or more (e.g., 4.5 MPa or more and less than 450 MPa).

In addition, the compressive stress of the buffering portion 20 under compressive strain of 10% is preferably 50% or less (e.g., 0.l% or more and 50% or less), more preferably 25% or less (e.g., 0.l% or more and 25% or less), particularly preferably 10% or less (e.g., 0.l% or more and 10% or less) of that of the heat insulating portion 10.

In addition, it is appropriate that the compressive stress of the heat insulating portion 10 under compressive strain of 10% is 0.5 MPa or more and 450 MPa or less, the compressive stress of the buffering portion 20 under compressive strain of 10% is 0.05 MPa or more and 4.5 MPa or less, and the compressive stress of the buffering portion 20 under compressive strain of 10% is 50% or less, 25% or less, 10% or less, or 1% or less of the compressive stress of the heat insulating portion 10 under compressive strain of 10%. It is preferred that the compressive stress of the heat insulating portion 10 under compressive strain of 10% is 1 MPa or more and 300 MPa or less, the compressive stress of the buffering portion 20 under compressive strain of 10% is 0.1 MPa or more and 3 MPa or less, and the compressive stress of the buffering portion 20 under compressive strain of 10% is 50% or less, 25% or less, 10% or less, or 1% or less of the compressive stress of the heat insulating portion 10 under compressive strain of 10%. It is more preferred that the compressive stress of the heat insulating portion 10 under compressive strain of 10% is 1.5 MPa or more and 150 MPa or less, the compressive stress of the buffering portion 20 under compressive strain of 10% is 0.15 MPa or more and 1.5 MPa or less, and the compressive stress of the buffering portion 20 under compressive strain of 10% is 50% or less, 25% or less, 10% or less, or 1% or less of the compressive stress of the heat insulating portion 10 under compressive strain of 10%. It is particularly preferred that the compressive stress of the heat insulating portion 10 under compressive strain of 10% is 1.5 MPa or more and 1 GPa or less, the compressive stress of the buffering portion 20 under compressive strain of 10% is 0.15 MPa or more and 1 MPa or less, and the compressive stress of the buffering portion 20 under compressive strain of 10% is 50% or less, 25% or less, 10% or less, or 1% or less of the compressive stress of the heat insulating portion 10 under compressive strain of 10%.

The compressive moduli of elasticity and compressive stresses of the heat insulating portion 10 and the buffering portion 20 included in the heat insulating material 1 are each measured by a method in conformity with Method C of "JIS K 6254:2016 Rubber, vulcanized or thermoplastic-Determination of stress-strain properties." As the shape of the test piece, the shapes of the heat insulating portion 10 and the buffering portion 20 included in the heat insulating material 1 are each employed. In addition, a "projected area of the heat insulating material 1 in plan view of the heat insulating material 1" is used as a "sectional area of the test piece" to be used for calculation of the "compressive stresses" of the heat insulating portion 10 and the buffering portion 20, instead of the sectional areas of the heat insulating portion 10 and the buffering portion 20. In addition, the original sizes of the heat insulating portion 10 and the buffering portion 20 are used as "original sizes of the test piece" to be used for calculation of the "compressive moduli of elasticity" of the heat insulating portion 10 and the buffering portion 20.

The heat insulating portion 10 has excellent heat insulating properties. That is, for example, the thermal conductivity at 23°C of the heat insulating portion 10 is preferably 0.3 W/(m·K) or less (e.g., 0.005 W/(m·K) or more and 0.3 W/(m·K) or less), more preferably 0.1 W/(m·K) or less (e.g., 0.005 W/(m·K) or more and 0.1 W/(m·K) or less), particularly preferably 0.05 W/(m·K) or less (e.g., 0.005 W/(m·K) or more and 0.05 W/(m·K) or less).

The thermal conductivity at 23°C of the heat insulating portion 10 may be smaller than the thermal conductivity at 23°C of the buffering portion 20. Specifically, the thermal conductivity of the heat insulating portion 10 at 23°C is smaller than that of the buffering portion 20 preferably 0.01 W/(m·K) or more (e.g., 0.01 W/(m·K) or more and 20 W/(m·K) or less), more preferably 0.05 W/(m·K) or more (e.g., 0.05 W/(m·K) or more and 20 W/(m·K) or less), particularly preferably 0.1 W/(m·K) or more (e.g., 0.1 W/(m·K) or more and 20 W/(m·K) or less).

In addition, the thermal conductivity at 23°C of the heat insulating portion 10 is preferably 50% or less (e.g., 10% or more and 50% or less), more preferably 30% or less (e.g., 10% or more and 30% or less), particularly preferably 20% or less (e.g., 10% or more and 20% or less) of that of the buffering portion 20.

In addition, it is preferred that the thermal conductivity at 23°C of the heat insulating portion 10 is 0.3 W/(m·K) or less (e.g., 0.005 W/(m·K) or more and 0.3 W/(m·K) or less), the thermal conductivity at 23°C of the buffering portion 20 is 3 W/(m·K) or less (e.g., 0.015 W/(m·K) or more and 3 W/(m·K) or less), and the thermal conductivity at 23°C of the heat insulating portion 10 is 50% or less, 30% or less, 20% or less, or 10% or less of that of the buffering portion 20. It is more preferred that the thermal conductivity at 23°C of the heat insulating portion 10 is 0.1 W/(m·K) or less (e.g., 0.005 W/(m·K) or more and 0.1 W/(m·K) or less), the thermal conductivity at 23°C of the buffering portion 20 is 1 W/(m·K) or less (e.g., 0.015 W/(m·K) or more and 1 W/(m·K) or less), and the thermal conductivity at 23°C of the heat insulating portion 10 is 50% or less, 30% or less, 20% or less, or 10% or less of that of the buffering portion 20. It is particularly preferred that the thermal conductivity at 23°C of the heat insulating portion 10 is 0.05 W/(m·K) or less (e.g., 0.005 W/(m·K) or more and 0.05 W/(m·K) or less), the thermal conductivity at 23°C of the buffering portion 20 is 0.5 W/(m·K) or less (e.g., 0.015 W/(m·K) or more and 0.5 W/(m·K) or less), and the thermal conductivity at 23°C of the heat insulating portion 10 is 50% or less, 30% or less, 20% or less, or 10% or less of that of the buffering portion 20.

The thermal conductivities at 23°C of the heat insulating portion 10 and the buffering portion 20 are each measured by a method in conformity with "JIS A 1412-1:2016 Test method for thermal resistance and related properties of thermal insulations-Part 1: Guarded hot plate apparatus (GHP Method)."

The heat insulating portion 10 is not particularly limited as long as the heat insulating portion 10 is a formed body having desired heat insulating properties, but is preferably a porous body. The porous body is not particularly limited, but for example, is preferably a press-formed body of powder or a fiber body.

The press-formed body of powder forming the heat insulating portion 10 is produced by press-forming a raw material containing the powder. The powder is not particularly limited as long as the powder is applicable to the heat insulating portion 10, but for example, is preferably formed of inorganic fine particles.

For example, the inorganic fine particles are preferably metal oxide fine particles. For example, the metal oxide fine particles are preferably one or more selected from the group consisting of: silica fine particles; and alumina fine particles.

The silica fine particles may be dry silica fine particles (anhydrous silica fine particles) produced by a vapor phase method or wet silica fine particles produced by a wet method. The dry silica fine particles are preferably fumed silica fine particles. The fumed silica fine particles may be hydrophilic fumed silica fine particles or hydrophobic fumed silica fine particles.

The alumina fine particles may be dry alumina fine particles (anhydrous alumina fine particles) produced by a vapor phase method or wet alumina fine particles produced by a wet method. The dry alumina fine particles are preferably fumed alumina fine particles. The fumed alumina fine particles may be hydrophilic fumed alumina fine particles or hydrophobic fumed alumina fine particles.

The average particle diameter of primary particles of the powder is not particularly limited, but for example, is preferably 200 nm or less, more preferably 100 nm or less, particularly preferably 50 nm or less. The lower limit value of the average particle diameter of the primary particles of the powder is not particularly limited, but for example, may be 2 nm or more.

The specific surface area of the powder by a BET method is not particularly limited, but for example, is preferably 15 m²/g or more, more preferably 20 m²/g or more, particularly preferably 30 m²/g or more. The upper limit value of the specific surface area of the powder by a BET method is not particularly limited, but for example, may be 500 m²/g or less or 450 m²/g or less.

The content of the powder in the press-formed body is not particularly limited as long as the content falls within a range in which the effects of the present invention are obtained, but for example, is preferably 50 wt% or more (50 wt% or more and 95 wt% or less), more preferably 52 wt% or more (52 wt% or more and 93 wt% or less), particularly preferably 56 wt% or more (56 wt% or more and 90 wt% or less).

The press-formed body may further include a component other than the powder. The press-formed body may include, for example, the powder and a fiber. In this case, the press-formed body may include one or both of an inorganic fiber and an organic fiber, but preferably includes an inorganic fiber.

The inorganic fiber is not particularly limited, but for example, may be one or more selected from the group consisting of: a silica fiber; an alumina fiber; a silica-alumina fiber; a silica-alumina-magnesia fiber; a biosoluble inorganic fiber; a glass fiber; a zirconia fiber; an alkaline earth metal silicate fiber; rockwool; and a basalt fiber.

The biosoluble inorganic fiber is an inorganic fiber having biosolubility. That is, the biosoluble inorganic fiber is, for example, an inorganic fiber having a solubility in physiological saline at 40°C of 1% or more. For example, the solubility in physiological saline is measured as described below. Specifically, 1 g of a sample prepared by pulverizing the inorganic fiber into 200 mesh or less and 150 mL of physiological saline are first loaded into a conical flask (volume: 300 mL) and placed in an incubator at 40°C. Next, horizontal vibration is continuously applied to the conical flask at 120 rotations per minute for 50 hours. After that, the concentrations (mg/L) of elements (only main elements are required) included in a filtrate obtained through filtration are measured with an ICP emission spectrometer. Moreover, the solubility (%) in physiological saline is calculated based on the measured concentrations of the elements and the contents (mass%) of the elements in the inorganic fiber before dissolution. That is, for example, when the measurement elements are silicon (Si), magnesium (Mg), calcium (Ca), and aluminum (Al), a solubility C (%) in physiological saline is calculated by the following formula: C (%)=[amount (L) of filtrate×(a₁+a₂+a₃+a₄)×100]/[mass (mg) of inorganic fiber before dissolution×(b₁+b₂+b₃+b₄)/100]. In this formula, a1, a2, a3, and a4 represent the measured concentrations (mg/L) of silicon, magnesium, calcium, and aluminum, respectively, and b1, b2, b3, and b4 represent the contents (mass%) of silicon, magnesium, calcium, and aluminum in the inorganic fiber before dissolution, respectively.

The biosoluble inorganic fiber may have, for example, a total content of SiO₂, ZrO₂, Al₂O₃, and TiO₂ of 50 wt% or more and 82 wt% or less and a total content of an alkali metal oxide and an alkaline earth metal oxide of 18 wt% or more and 50 wt% or less.

In addition, the biosoluble inorganic fiber may have, for example, a content of SiO₂ of 50 wt% or more and 82 wt% or less and a total content of CaO and MgO of 10 wt% or more and 43 wt% or less.

The organic fiber is not particularly limited, but for example, may be one or more selected from the group consisting of: an aramid fiber; a polyester fiber; a polyethylene fiber; a polypropylene fiber; a polyvinyl chloride fiber; a fluororesin fiber; a nylon fiber; a rayon fiber; an acrylic fiber; and a polyolefin fiber.

The average fiber length of the fiber is not particularly limited, but for example, is preferably 0.05 mm or more and 50 mm or less, more preferably 0.5 mm or more and 20 mm or less, particularly preferably 1 mm or more and 10 mm or less.

The average fiber diameter of the fiber is not particularly limited, but for example, is preferably 0.1 µm or more and 50 µm or less, more preferably 1 µm or more and 20 µm or less, particularly preferably 2 µm or more and 15 µm or less.

When the press-formed body includes the powder and the fiber, the content of the powder and the content of the fiber (when the press-formed body includes the inorganic fiber and the organic fiber, the total content of the inorganic fiber and the organic fiber) in the press-formed body are not particularly limited as long as the contents fall within a range in which the effects of the present invention are obtained, but for example, the press-formed body includes preferably 50 wt% or more and 95 wt% or less of the powder and 1 wt% or more and 50 wt% or less of the fiber, more preferably 52 wt% or more and 93 wt% or less of the powder and 1 wt% or more and 20 wt% or less of the fiber, particularly preferably 56 wt% or more and 90 wt% or less of the powder and 1.5 wt% or more and 10 wt% or less of the fiber.

In addition, when the press-formed body includes the powder and the inorganic fiber, the content of the powder and the content of the inorganic fiber in the press-formed body are not particularly limited as long as the contents fall within a range in which the effects of the present invention are obtained, but for example, the press-formed body includes preferably 50 wt% or more and 95 wt% or less of the powder and 1 wt% or more and 50 wt% or less of the inorganic fiber, more preferably 52 wt% or more and 93 wt% or less of the powder and 1 wt% or more and 20 wt% or less of the inorganic fiber, particularly preferably 56 wt% or more and 90 wt% or less of the powder and 1.5 wt% or more and 10 wt% or less of the inorganic fiber.

The press-formed body may include, for example, the powder and a radiation scattering material. In this case, the press-formed body may include the powder, the fiber, and the radiation scattering material. The radiation scattering material is not particularly limited as long as the radiation scattering material can reduce heat transfer caused by radiation. Specifically, the radiation scattering material may be, for example, one or more selected from the group consisting of: silicon carbide; silicon nitride; titania; zirconia; zirconium silicate (zircon); carbon; iron oxide; chromium oxide; zinc sulfide; and barium titanate.

The average particle diameter of the radiation scattering material is not particularly limited, but for example, is preferably 1 µm or more and 50 µm or less, more preferably 1 µm or more and 20 µm or less. The radiation scattering material is preferably reflective of far-infrared light. Specifically, for example, the radiation scattering material has an average value of a refractive index for light at a wavelength of 1.5 µm or more and 20 µm or less of preferably 1.1 or more, more preferably 1.2 or more, particularly preferably 1.25 or more.

When the press-formed body includes the powder, the fiber, and the radiation scattering material, the content of the powder, the content of the fiber (when the press-formed body includes the inorganic fiber and the organic fiber, the total content of the inorganic fiber and the organic fiber), and the content of the radiation scattering material in the press-formed body are not particularly limited as long as the contents fall with a range in which the effects of the present invention are obtained, but for example, the press-formed body may include 50 wt% or more and 93 wt% or less of the powder, 2 wt% or more and 20 wt% or less of the fiber, and 5 wt% or more and 40 wt% or less of the radiation scattering material, or may include 65 wt% or more and 80 wt% or less of the powder, 5 wt% or more and 18 wt% or less of the fiber, and 15 wt% or more and 30 wt% or less of the radiation scattering material.

The fiber body forming the heat insulating portion 10 is a formed body of a fiber. That is, the fiber body is produced by forming a raw material containing a fiber. The fiber body may be a dry fiber body produced by a dry method or a wet fiber body produced by a wet method.

The fiber included in the fiber body is not particularly limited as long as the fiber is applicable to the heat insulating portion 10. The fiber body may include one or both of an inorganic fiber and an organic fiber, but preferably includes an inorganic fiber.

The inorganic fiber is not particularly limited, but for example, may be one or more selected from the group consisting of: a silica fiber; an alumina fiber; a silica-alumina fiber; a silica-alumina-magnesia fiber; a biosoluble inorganic fiber; a glass fiber; a zirconia fiber; an alkaline earth metal silicate fiber; rockwool; and a basalt fiber.

The organic fiber is not particularly limited, but for example, may be one or more selected from the group consisting of: an aramid fiber; a polyester fiber; a polyethylene fiber; a polypropylene fiber; a polyvinyl chloride fiber; a fluororesin fiber; a nylon fiber; a rayon fiber; an acrylic fiber; and a polyolefin fiber.

The average fiber length of the fiber is not particularly limited, but for example, is preferably 0.05 mm or more and 50 mm or less, more preferably 0.5 mm or more and 20 mm or less, particularly preferably 1 mm or more and 10 mm or less.

The average fiber diameter of the fiber is not particularly limited, but for example, is preferably 0.1 µm or more and 50 µm or less, more preferably 1 µm or more and 20 µm or less, particularly preferably 2 µm or more and 15 µm or less.

The content of the fiber (when the fiber body includes the inorganic fiber and the organic fiber, the total content of the inorganic fiber and the organic fiber) in the fiber body forming the heat insulating portion 10 is not particularly limited as long as the content falls within a range in which the effects of the present invention are obtained, but for example, is preferably 70 wt% or more (e.g., 70 wt% or more and 99.5 wt% or less), more preferably 80 wt% or more (e.g., 80 wt% or more and 99.5 wt% or less), particularly preferably 85 wt% or more (e.g., 85 wt% or more and 99 wt% or less, or 85 wt% or more and 95 wt% or less) .

In addition, when the heat insulating portion 10 is an inorganic fiber body, the content of the inorganic fiber in the heat insulating portion 10 is not particularly limited as long as the content falls within a range in which the effects of the present invention are obtained, but for example, is preferably 70 wt% or more (e.g., 70 wt% or more and 99.5 wt% or less), more preferably 80 wt% or more (e.g., 80 wt% or more and 99.5 wt% or less), particularly preferably 85 wt% or more (e.g., 85 wt% or more and 99 wt% or less, or 85 wt% or more and 95 wt% or less).

The fiber body forming the heat insulating portion 10 may further include a component other than the fiber. The fiber body may include, for example, the fiber and a binder. In this case, the fiber body may include one or both of an inorganic binder and an organic binder.

The inorganic binder is not particularly limited, but for example, is preferably one or more selected from the group consisting of: colloidal silica, such as anionic colloidal silica and cationic colloidal silica; fumed silica; zirconia sol; titania sol; silica sol; alumina sol; bentonite; and kaolin. The organic binder is not particularly limited, but for example, is preferably one or more selected from the group consisting of: a rubber-based material; a water-soluble organic polymer compound; a thermoplastic resin; a thermosetting resin; and a sugar.

When the fiber body forming the heat insulating portion 10 includes the fiber and the binder, the content of the binder (when the fiber body includes the inorganic binder and the organic binder, the total content of the inorganic binder and the organic binder) in the fiber body is not particularly limited as long as the content falls within a range in which the effects of the present invention are obtained, but for example, is preferably 0.5 wt% or more and 30 wt% or less, more preferably 0.5 wt% or more and 20 wt% or less, particularly preferably 0.5 wt% or more and 15 wt% or less with respect to 100 parts by weight of the fiber (when the fiber body includes the inorganic fiber and the organic fiber, 100 parts by weight of the total content of the inorganic fiber and the organic fiber).

In addition, when the heat insulating portion 10 is an inorganic fiber body including the inorganic fiber and the binder, the content of the binder (when the fiber body includes the inorganic binder and the organic binder, the total content of the inorganic binder and the organic binder) in the heat insulating portion 10 is not particularly limited as long as the content falls within a range in which the effects of the present invention are obtained, but for example, is preferably 0.5 wt% or more and 30 wt% or less, more preferably 0.5 wt% or more and 20 wt% or less, particularly preferably 0.5 wt% or more and 15 wt% or less with respect to 100 parts by weight of the inorganic fiber.

The bulk density of the fiber body forming the heat insulating portion 10 is not particularly limited, but for example, is preferably 0.1 g/cm³ or more and 1.0 g/cm³ or less, more preferably 0.15 g/cm³ or more and 0.6 g/cm³ or less, particularly preferably 0.2 g/cm³ or more and 0.6 g/cm³ or less.

The basis weight of the fiber body forming the heat insulating portion 10 is not particularly limited, but for example, is preferably 0.005 g/cm² or more and 10 g/cm² or less, more preferably 0.0075 g/cm² or more and 3.6 g/cm² or less, particularly preferably 0.01 g/cm² or more and 2.4 g/cm² or less.

The buffering portion 20 is not particularly limited as long as the buffering portion 20 is a formed body that is more deformable by compression than the heat insulating portion 10, but for example, may be a fiber body, an elastomer formed body, or a metal spring.

The fiber body forming the buffering portion 20 is a formed body of a fiber. That is, the fiber body is produced by forming a raw material containing a fiber. The fiber body may be a dry fiber body produced by a dry method or a wet fiber body produced by a wet method.

The fiber included in the fiber body is not particularly limited as long as the fiber is applicable to the buffering portion 20. The fiber body may include one or both of an inorganic fiber and an organic fiber, but preferably includes an inorganic fiber.

The inorganic fiber is not particularly limited, but for example, may be one or more selected from the group consisting of: a silica fiber; an alumina fiber; a silica-alumina fiber; a silica-alumina-magnesia fiber; a biosoluble inorganic fiber; a glass fiber; a zirconia fiber; an alkaline earth metal silicate fiber; rockwool; and a basalt fiber.

The organic fiber is not particularly limited, but for example, may be one or more selected from the group consisting of: an aramid fiber; a polyester fiber; a polyethylene fiber; a polypropylene fiber; a polyvinyl chloride fiber; a fluororesin fiber; a nylon fiber; a rayon fiber; an acrylic fiber; and a polyolefin fiber.

The average fiber length of the fiber is not particularly limited, but for example, is preferably 0.05 mm or more and 50 mm or less, more preferably 0.5 mm or more and 20 mm or less, particularly preferably 1 mm or more and 10 mm or less.

The average fiber diameter of the fiber is not particularly limited, but for example, is preferably 0.1 µm or more and 50 µm or less, more preferably 0.5 µm or more and 20 µm or less, particularly preferably 1 µm or more and 10 µm or less, most preferably 1 µm or more and 8 µm or less.

The content of the fiber (when the fiber body includes the inorganic fiber and the organic fiber, the total content of the inorganic fiber and the organic fiber) in the fiber body forming the buffering portion 20 is not particularly limited as long as the content falls within a range in which the effects of the present invention are obtained, but for example, is preferably 70 wt% or more (e.g., 70 wt% or more and 99.5 wt% or less), more preferably 80 wt% or more (e.g., 80 wt% or more and 99.5 wt% or less), particularly preferably 85 wt% or more (e.g., 85 wt% or more and 99 wt% or less, or 85 wt% or more and 95 wt% or less).

In addition, when the buffering portion 20 is an inorganic fiber body, the content of the inorganic fiber in the buffering portion 20 is not particularly limited as long as the content falls within a range in which the effects of the present invention are obtained, but for example, is preferably 70 wt% or more (e.g., 70 wt% or more and 99.5 wt% or less), more preferably 80 wt% or more (e.g., 80 wt% or more and 99.5 wt% or less), particularly preferably 85 wt% or more (e.g., 85 wt% or more and 99 wt% or less, or 85 wt% or more and 95 wt% or less).

The fiber body forming the buffering portion 20 may further include a component other than the fiber. The fiber body may include, for example, the fiber and a binder. In this case, the fiber body may include one or both of an inorganic binder and an organic binder.

The inorganic binder is not particularly limited, but for example, is preferably one or more selected from the group consisting of: colloidal silica, such as anionic colloidal silica and cationic colloidal silica; fumed silica; zirconia sol; titania sol; silica sol; alumina sol; bentonite; and kaolin. The organic binder is not particularly limited, but for example, is preferably one or more selected from the group consisting of: a rubber-based material; a water-soluble organic polymer compound; a thermoplastic resin; a thermosetting resin; and a sugar.

When the fiber body forming the buffering portion 20 includes the fiber and the binder, the content of the binder (when the fiber body includes the inorganic binder and the organic binder, the total content of the inorganic binder and the organic binder) in the fiber body is not particularly limited as long as the content falls within a range in which the effects of the present invention are obtained, but for example, is preferably 0.5 wt% or more and 30 wt% or less, more preferably 0.5 wt% or more and 20 wt% or less, particularly preferably 0.5 wt% or more and 15 wt% or less with respect to 100 parts by weight of the fiber (when the fiber body includes the inorganic fiber and the organic fiber, 100 parts by weight of the total content of the inorganic fiber and the organic fiber).

In addition, when the buffering portion 20 is an inorganic fiber body including the inorganic fiber and the binder, the content of the binder (when the fiber body includes the inorganic binder and the organic binder, the total content of the inorganic binder and the organic binder) in the buffering portion 20 is not particularly limited as long as the content falls within a range in which the effects of the present invention are obtained, but for example, is preferably 0.5 wt% or more and 30 wt% or less, more preferably 0.5 wt% or more and 20 wt% or less, particularly preferably 0.5 wt% or more and 15 wt% or less with respect to 100 parts by weight of the inorganic fiber.

The bulk density of the fiber body forming the buffering portion 20 is not particularly limited, but for example, is preferably 0.02 g/cm³ or more and 0.35 g/cm³ or less, more preferably 0.05 g/cm³ or more and 0.3 g/cm³ or less, particularly preferably 0.1 g/cm³ or more and 0.3 g/cm³ or less.

The basis weight of the fiber body forming the buffering portion 20 is not particularly limited, but for example, is preferably 0.001 g/cm² or more and 3.5 g/cm² or less, more preferably 0.0025 g/cm² or more and 1.8 g/cm² or less, particularly preferably 0.005 g/cm² or more and 1.2 g/cm² or less.

When the heat insulating portion 10 is the fiber body including the fiber and the binder, and the buffering portion 20 is also the fiber body including the fiber and the binder, the density of the binder in the buffering portion 20 (the density of the binder per unit volume of the buffering portion 20 calculated by dividing the content (g) of the binder in the buffering portion 20 by the volume (cm³) of the buffering portion 20) (g/cm³) is preferably smaller than the density of the binder in the heat insulating portion 10 (the density of the binder per unit volume of the heat insulating portion 10 calculated by dividing the content (g) of the binder in the heat insulating portion 10 by the volume (cm³) of the heat insulating portion 10) (g/cm³). The density (g/cm³) of the binder in the heat insulating portion 10 or the buffering portion 20 may be calculated by multiplying the bulk density (g/cm³) of the heat insulating portion 10 or the buffering portion 20 by the content ratio (wt%) of the binder in the heat insulating portion 10 or the buffering portion 20.

That is, a ratio of the density of the binder in the buffering portion 20 to the density of the binder in the heat insulating portion 10 is, for example, preferably 70% or less, more preferably 50% or less, particularly preferably 25% or less.

Specifically, for example, it is appropriate that the density of the binder in the heat insulating portion 10 be 0.0005 g/cm³ or more and 0.3 g/cm³ or less, the density of the binder in the buffering portion 20 be 0.0001 g/cm³ or more and 0.105 g/cm³ or less, and the density of the binder in the buffering portion 20 be 70% or less, 50% or less, or 25% or less of the density of the binder in the heat insulating portion 10. It is preferred that the density of the binder in the heat insulating portion 10 be 0.00075 g/cm³ or more and 0.18 g/cm³ or less, the density of the binder in the buffering portion 20 be 0.00025 g/cm³ or more and 0.09 g/cm³ or less, and the density of the binder in the buffering portion 20 be 70% or less, 50% or less, or 25% or less of the density of the binder in the heat insulating portion 10. It is particularly preferred that the density of the binder in the heat insulating portion 10 be 0.001 g/cm³ or more and 0.18 g/cm³ or less, the density of the binder in the buffering portion 20 be 0.0005 g/cm³ or more and 0.09 g/cm³ or less, and the density of the binder in the buffering portion 20 be 70% or less, 50% or less, or 25% or less of the density of the binder in the heat insulating portion 10.

The elastomer formed body forming the buffering portion 20 is produced by forming an elastomer. The elastomer forming the elastomer formed body is not particularly limited as long as the elastomer is applicable to the buffering portion 20, but for example, may include one or more selected from the group consisting of: a rubber; and a thermoplastic elastomer.

The rubber may be one or both of a synthetic rubber and a natural rubber. The synthetic rubber is not particularly limited, but for example, may be one or more selected from the group consisting of: a styrene-butadiene rubber; a butadiene rubber; a chloroprene rubber; an isoprene rubber; a butyl rubber; an ethylene propylene rubber; a nitrile rubber; a silicone rubber; a fluororubber; an acrylic rubber; a urethane rubber; a polysulfide rubber; and an epichlorohydrin rubber.

The thermoplastic elastomer is not particularly limited, but for example, may be one or more selected from the group consisting of: a polystyrene-based thermoplastic elastomer; a polyolefin-based thermoplastic elastomer; a vinyl chloride-based thermoplastic elastomer; a polyurethane-based thermoplastic elastomer; a polyester-based thermoplastic elastomer; a polyamide-based thermoplastic elastomer; and a polybutadiene-based thermoplastic elastomer. The elastomer formed body may be a porous elastomer formed body or a nonporous elastomer formed body, but is preferably a porous elastomer formed body. The porous elastomer formed body may be a closed-cell foam elastomer formed body (porous elastomer formed body produced by foaming for forming a closed cell) or an open-cell foam elastomer formed body (porous elastomer formed body produced by foaming for forming an open cell).

The metal spring forming the buffering portion 20 is not particularly limited, but for example, may include one or more selected from the group consisting of: aluminum; an aluminum alloy; copper; a copper alloy; a steel material; titanium; a titanium alloy; and a magnesium alloy.

The shape of the metal spring forming the buffering portion 20 is not particularly limited, but for example, the metal spring may be one or more selected from the group consisting of: a leaf spring; a coil spring; a disc spring; and a bead-shaped metal spring.

The shape of the heat insulating portion 10 is not particularly limited as long as the shape is suitable for heat insulation of the surface included in the battery 100, but for example, is preferably a plate shape. In this case, the shape of the heat insulating portion 10 in plan view of the heat insulating material 1 (e.g., the shape of the heat insulating portion 10 when seen in a direction from the surface 43a of the one cell 40a toward the surface 43b of the other cell 40b in FIG. 1A) is not particularly limited, but for example, may be a rectangular shape (e.g., a polygonal shape such as a quadrangular shape), a circular shape, an elliptic shape, or any other shape.

The thickness of the heat insulating portion 10 (a length from one surface closest to the surface of the battery serving as a heat insulation target to the other surface on a side opposite to the one surface) is not particularly limited, but for example, may be 0.05 mm or more and 100 mm or less, 0.1 mm or more and 60 mm or less, or 0.5 mm or more and 40 mm or less.

More specifically, the thickness of the heat insulating portion 10 (in the example illustrated in FIG. 1A, a length from one surface 11 of the heat insulating portion 10 closest to the one cell 40a to the other surface 12 of the heat insulating portion 10 closest to the other cell 40b) is, for example, preferably 0.05 mm or more and 9 mm or less, more preferably 0.1 mm or more and 6 mm or less, particularly preferably 0.5 mm or more and 3 mm or less.

The height of at least part of the buffering portion 20 arranged at a position closer to the surface of the battery serving as a heat insulation target than the heat insulating portion 10 (a length from one surface of the buffering portion 20 closest to the surface of the battery serving as a heat insulation target to the other surface of the buffering portion 20 closest to the heat insulating portion 10) is not particularly limited, but for example, may be 0.05 mm or more and 100 mm or less, 0.1 mm or more and 60 mm or less, or 0.5 mm or more and 40 mm or less.

More specifically, the height of the at least part of the buffering portion 20 arranged at a position closer to the surface of the battery serving as a heat insulation target than the heat insulating portion 10 (in the example illustrated in FIG. 1A, a length from one surface 21 of the buffering portion 20 closest to the surface 43a of the one cell 40a to the other surface 22 of the buffering portion 20 closest to the heat insulating portion 10) is, for example, preferably 0.05 mm or more and 9 mm or less, more preferably 0.1 mm or more and 6 mm or less, particularly preferably 0.5 mm or more and 3 mm or less.

The combination of the thickness of the heat insulating portion 10 and the height of the at least part of the buffering portion 20 may be specified by arbitrarily combining one of the above-mentioned thicknesses of the heat insulating portion 10 and one of the above-mentioned heights of the at least part of the buffering portion 20.

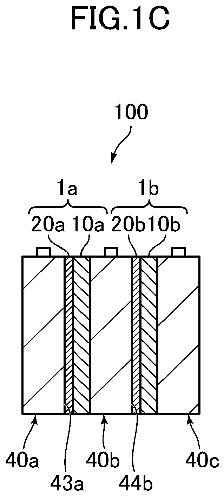

The battery 100 may include three or more cells arranged in a stacked manner. That is, in an example illustrated in FIG. 1C, the battery 100 includes: a first cell 40a; a second cell 40b arranged adjacent to the first cell 40a; and a third cell 40c arranged adjacent to an opposite side of the second cell 40b to the first cell 40a.

In this case, a first heat insulating material 1a including a first heat insulating portion 10a and a first buffering portion 20a is arranged between the first cell 40a and the second cell 40b, and a second heat insulating material 1b including a second heat insulating portion 10b and a second buffering portion 20b is arranged between the second cell 40b and the third cell 40c.

Moreover, at least part of the first buffering portion 20a is arranged at a position closer to a surface 43a of the first cell 40a than the first heat insulating portion 10a between the first cell 40a and the second cell 40b, and at least part of the second buffering portion 20b is arranged at a position closer to a surface 44b of the second cell 40b than the second heat insulating portion 10b between the second cell 40b and the third cell 40c.

As described above, for each of a plurality of cells included in the battery 100, at least part of the buffering portion 20 of at least one heat insulating material 1 is preferably arranged at a position closer to the surface included in the battery 100 than the heat insulating portion 10 of the heat insulating material 1.

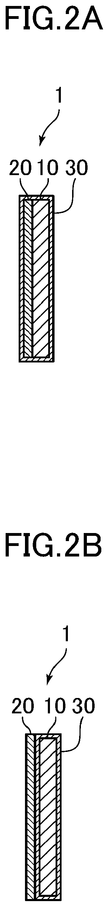

The heat insulating material 1 may further include another portion in addition to the heat insulating portion 10 and the buffering portion 20. That is, for example, as illustrated in each of FIG. 2A and FIG. 2B, the heat insulating material 1 may further include a dust generation preventing material 30 that covers part or the entirety of the surface of the heat insulating portion 10.

The dust generation preventing material 30 is provided in the heat insulating material 1 in order to prevent dust generation from the heat insulating portion 10. That is, the dust generation preventing material 30 is arranged so as to cover a surface of the heat insulating portion 10 having a possibility of generating dust. The shape of the dust generation preventing material 30 is not particularly limited as long as the shape enables suppression of dust generation from the heat insulating portion 10.

That is, the dust generation preventing material 30 may be, for example, a sheet-shaped formed body that covers part of the surface of the heat insulating portion 10, or part of the surface of a composite including the heat insulating portion 10 and the buffering portion 20. In this case, the sheet-shaped dust generation preventing material 30 may be fixed to the part of the surface of the heat insulating portion 10, or the part of the surface of the composite including the heat insulating portion 10 and the buffering portion 20 with, for example, an adhesive composition such as an adhesive and/or a fixture such as a stud.

In addition, the dust generation preventing material 30 may be, for example, a bag-shaped formed body that houses the heat insulating portion 10. In this case, the bag-shaped dust generation preventing material 30 may house the composite including the heat insulating portion 10 and the buffering portion 20 as illustrated in FIG. 2A, or may house the heat insulating portion 10 without housing the buffering portion 20 as illustrated in FIG. 2B. In those cases, the heat insulating material 1 may be obtained by, for example, packing the heat insulating portion 10 or the composite including the heat insulating portion 10 and the buffering portion 20 in an inside of the bag-shaped dust generation preventing material 30.

In addition, the dust generation preventing material 30 that covers part or the entirety of the surface of the heat insulating portion 10 or the composite including the heat insulating portion 10 and the buffering portion 20 may be formed by applying a liquid serving as a raw material of the dust generation preventing material 30 onto the part or the entirety of the surface, followed by drying.

The liquid serving as a raw material of the dust generation preventing material 30 may be, for example, a solution containing organic substance (e.g., a monomer of a thermosetting resin, a rubber-based material, or silicone). In this case, the solution containing organic substance may be applied onto the part or the entirety of the surface of the heat insulating portion 10 or the composite including the heat insulating portion 10 and the buffering portion 20, followed by drying and/or heat treatment, to thereby form the dust generation preventing material 30 as a coating derived from the organic substance.

In addition, the liquid serving as a raw material of the dust generation preventing material 30 may be, for example, a dispersion of inorganic substance. In this case, the dispersion of inorganic substance may be applied onto the part or the entirety of the surface of the heat insulating portion 10 or the composite including the heat insulating portion 10 and the buffering portion 20, followed by drying and/or heat treatment, to thereby form the dust generation preventing material 30 as a coating derived from the inorganic substance.

The dust generation preventing material 30 is not particularly limited as long as the dust generation preventing material 30 is a formed body capable of preventing dust generation from the heat insulating portion 10, but for example, is preferably a fiber body, a metal foil, or a resin sheet.

The fiber body forming the dust generation preventing material 30 is a formed body of a fiber. That is, the fiber body is produced by forming a raw material containing a fiber. The fiber body may be a dry fiber body produced by a dry method, a wet fiber body produced by a wet method, a fiber body produced by cross-weaving fibers, or a fiber body produced by making a fiber into paper, followed by forming into a paper form.

The fiber included in the fiber body is not particularly limited as long as the fiber is applicable to the dust generation preventing material 30. The fiber body may include one or both of an inorganic fiber and an organic fiber, but preferably includes an inorganic fiber.

The inorganic fiber is not particularly limited, but for example, may be one or more selected from the group consisting of: a silica fiber; an alumina fiber; a silica-alumina fiber; a silica-alumina-magnesia fiber; a biosoluble inorganic fiber; a glass fiber; a zirconia fiber; an alkaline earth metal silicate fiber; rockwool; and a basalt fiber.

The organic fiber is not particularly limited, but for example, may be one or more selected from the group consisting of: an aramid fiber; a polyester fiber; a polyethylene fiber; a polypropylene fiber; a polyvinyl chloride fiber; a fluororesin fiber; a nylon fiber; a rayon fiber; an acrylic fiber; and a polyolefin fiber.

The bulk density of the fiber body forming the dust generation preventing material 30 is not particularly limited, but for example, is preferably 0.01 g/cm³ or more and 3 g/cm³ or less, more preferably 0.025 g/cm³ or more and 2.5 g/cm³ or less, particularly preferably 0.05 g/cm³ or more and 2 g/cm³ or less.

The basis weight of the fiber body forming the dust generation preventing material 30 is not particularly limited, but for example, is preferably 10⁻⁶ g/cm² or more and 3 g/cm² or less, more preferably 2.5×10⁻⁶ g/cm² or more and 2.5 g/cm² or less, particularly preferably 5×10⁻⁶ g/cm² or more and 2 g/cm² or less.

The thickness of the fiber body forming the dust generation preventing material 30 is not particularly limited, but for example, may be 1 µm or more and 10 mm or less, and is preferably 5 µm or more and 8 mm or less, more preferably 10 µm or more and 5 mm or less, particularly preferably 20 µm or more and 3 mm or less.

The metal foil forming the dust generation preventing material 30 is not particularly limited, but for example, may be a metal foil of one or more selected from the group consisting of: aluminum; an aluminum alloy; copper; a copper alloy; iron; a steel material; titanium; a titanium alloy; and a magnesium alloy.

The thickness of the metal foil forming the dust generation preventing material 30 is not particularly limited, but for example, may be 1 µm or more and 10 µm or less, and is preferably 2 µm or more and 50 µm or less, particularly preferably 3 µm or more and 30 µm or less.

The resin sheet forming the dust generation preventing material 30 is not particularly limited, but for example, may be a resin sheet of one or more selected from the group consisting of: aramid; polyester; polyethylene; polypropylene; polyvinyl chloride; a fluororesin; nylon; rayon; acryl; and polyolefin.

The thickness of the resin sheet forming the dust generation preventing material 30 is not particularly limited, but for example, may be 10 µm or more and 500 µm or less, and is preferably 20 µm or more and 100 µm or less, particularly preferably 30 µm or more and 60 µm or less.

The airflow resistance of the dust generation preventing material 30 is not particularly limited, but for example, is preferably 0.01 Ns/m³ or more, more preferably 0.1 Ns/m³ or more, particularly preferably 1 Ns/m³ or more. The upper limit value of the airflow resistance of the dust generation preventing material 30 is not particularly limited, but for example, the airflow resistance may be 10⁸ Ns/m³ or less. The airflow resistance of the dust generation preventing material is measured by a method in conformity with "ISO 9053-1:2018 Acoustics-Determination of airflow resistance-Part 1: Static airflow method."

In the example illustrated in FIG. 2A, the heat insulating material 1 includes the bag-shaped dust generation preventing material 30 that houses the heat insulating portion 10 and the buffering portion 20. In addition, in the example illustrated in FIG. 2B, the heat insulating material 1 includes the bag-shaped dust generation preventing material 30 that houses the heat insulating portion 10, and the buffering portion 20 is not housed in the dust generation preventing material 30. In this case, at least part of the buffering portion 20 is arranged at a position closer to the surface of the battery 100 (e.g., the surface 43a of the one cell 40a in the example illustrated in FIG. 1A) than the heat insulating portion 10 and the dust generation preventing material 30.

Specifically, for example, in the case where the heat insulating portion 10 is the press-formed body of powder or the fiber body, when the heat insulating portion 10 is accommodated in the bag-shaped dust generation preventing material 30 formed of the fiber body, the metal foil, or the resin sheet, dust generation from the heat insulating portion 10 can be effectively prevented.

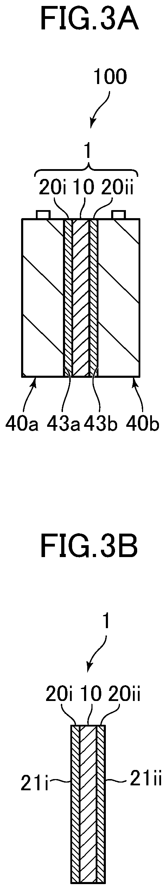

As illustrated in FIG. 3A and FIG. 3B, the heat insulating material 1 may include: the heat insulating portion 10 arranged between the pair of surfaces 43a and 43b included in the battery 100 and facing each other so as to cover each of the pair of surfaces 43a and 43b and arranged so as to face each of the pair of surfaces 43a and 43b of the battery 100; a first buffering portion 20i in which at least part thereof is arranged at a position closer to one of the pair of surfaces 43a and 43b (the surface 43a of one cell 40a illustrated in FIG. 3A) than the heat insulating portion 10; and a second buffering portion 20ii in which at least part thereof is arranged at a position closer to the other one of the pair of surfaces 43a and 43b (the surface 43b of the other cell 40b illustrated in FIG. 3A) than the heat insulating portion 10.

That is, in this case, the heat insulating material 1 includes: the first buffering portion 20 in which at least part thereof is arranged between the one surface 11 of the heat insulating material 10 and the one surface 43a of the battery 100; and the second buffering portion 20 in which at least part thereof is arranged between the other surface 12 of the heat insulating material 10 and the other surface 43b of the battery 100. As a result, the occurrence of a defect associated with expansion of the pair of surfaces 43a and 43b of the battery 100 facing each other is effectively prevented.

In the heat insulating material 1, at least part of the surface 21 of the buffering portion 20 facing the surface of the battery serving as a heat insulation target (e.g., the surface 43a of one cell 40a in FIG. 1A) is arranged at a position closer to the surface of the battery than the surface 11 of the heat insulating portion 10 facing the surface of the battery. That is, in plan view of the heat insulating material 1, the at least part of the buffering portion 20 arranged at a position closer to the surface of the battery than the heat insulating portion 10 covers the entirety or part of the surface 11 of the heat insulating portion 10 facing the surface of the battery.

Specifically, in plan view of the heat insulating material 1, a ratio of the area of a portion of the surface 21 of the buffering portion 20 arranged at a position closer to the surface of the battery than the heat insulating portion 10 to the area of the surface 11 of the heat insulating portion 10 facing the surface of the battery serving as a heat insulation target (the entire area of the surface 11 of the heat insulating portion 10 including a portion covered with the buffering portion 20) may be, for example, 1% or more, 5% or more, 10% or more, 15% or more, 20% or more, 30% or more, 40% or more, 50% or more, or 60% or more. The above-mentioned ratio may be, for example, 100% or less, 90% or less, 80% or less, 70% or less, 60% or less, 50% or less, 40% or less, 30% or less, or 20% or less. The above-mentioned ratio may be specified by arbitrarily combining one of the above-mentioned lower limit values and one of the above-mentioned upper limit values higher than the lower limit value.

When at least part of the buffering portion 20 arranged at a position closer to the surface of the battery than the heat insulating portion 10 covers part of the surface 11 of the heat insulating portion 10 facing the surface of the battery in plan view of the heat insulating material 1, for example, the heat insulating portion 10 and the buffering portion 20 may be arranged so as to form a sea-island structure in plan view of the heat insulating material 1. In this case, the heat insulating material 1 has, in plan view thereof, a sea-island structure in which one of the heat insulating portion 10 and the buffering portion 20 forms a sea portion and the other one thereof forms an island portion.

That is, the heat insulating material 1 may have, in plan view thereof, a sea-island structure in which the heat insulating portion 10 forms a sea portion and the buffering portion 20 forms an island portion. On the other hand, the heat insulating material 1 may have, in plan view thereof, a sea-island structure in which the buffering portion 20 forms a sea portion and the heat insulating portion 10 forms an island portion. In the sea-island structure, the sea portion refers to a portion surrounding each of one or more island portions (i.e., a portion surrounding the outer periphery of each island portion), and the island portion refers to a portion surrounded by the sea portion.

The heat insulating portion 10 and the buffering portion 20 may be arranged so as to form a sea-island structure including a single island portion (a sea-island structure in which the number of island portions is 1) in plan view of the heat insulating material 1.

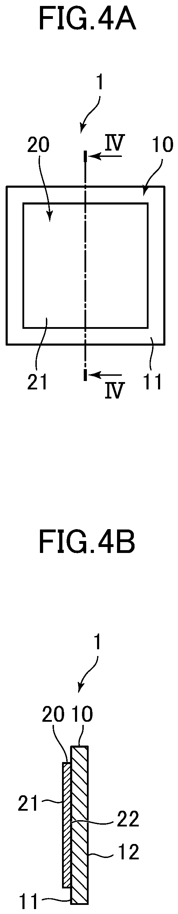

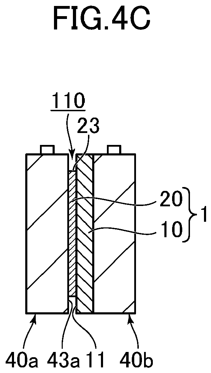

FIG. 4A is a view for schematically illustrating an example of the heat insulating material 1 in this case in plan view. FIG. 4B is a view for schematically illustrating a cross section of the heat insulating material 1 taken along the line IV-IV of FIG. 4A. FIG. 4C is a view for schematically illustrating a cross section of the battery 100 including the heat insulating material 1 illustrated in FIG. 4A and FIG. 4B. In the example illustrated in FIG. 4A to FIG. 4C, the buffering portion 20 forms a single island portion (the only one island portion), and the heat insulating portion 10 forms a sea portion.

When the heat insulating material 1 has the above-mentioned sea-island structure, at least part of the buffering portion 20 may be formed so as to protrude from the surface of the heat insulating portion 10 facing the surface included in the battery 100 toward the surface of the battery 100.

That is, in the example illustrated in FIG. 4C, the island portion formed by the buffering portion 20 is formed so as to protrude from the surface 11 of the heat insulating portion 10 facing the surface 43a of the one cell 40a toward the surface 43a of the cell 40a.

Moreover, when the heat insulating material 1 includes the buffering portion 20 formed so as to protrude from the surface of the heat insulating portion 10 as described above, a gap is formed, in the battery 100 in which the heat insulating material 1 is arranged, between the surface included in the battery 100 and the surface of the heat insulating portion 10 (the surface forming the sea portion), which are spaced apart from each other with the buffering portion 20.

That is, in the battery 100 illustrated in FIG. 4C, a gap 110 is formed between the surface 43a of one cell 40a and the surface 11 of the heat insulating portion 10 of the heat insulating material 1, which are spaced apart from each other with the buffering portion 20 of the heat insulating material 1.

In this regard, for example, in the example illustrated in FIG. 4C, when the surface 43a expanding due to excessive heat generation of one cell 40a presses the buffering portion 20 of the heat insulating material 1 during the operation of the battery 100, the buffering portion 20 is easily deformed by compression by causing part thereof to protrude into the gap 110 (more specifically, causing a side surface 23 of the buffering portion 20 to protrude into the gap 110).

The heat insulating portion 10 and the buffering portion 20 may be arranged so as to form a sea-island structure including a plurality of island portions in plan view of the heat insulating material 1. That is, for example, the heat insulating material 1 includes, in plan view thereof, buffering portions 20 forming the plurality of island portions.

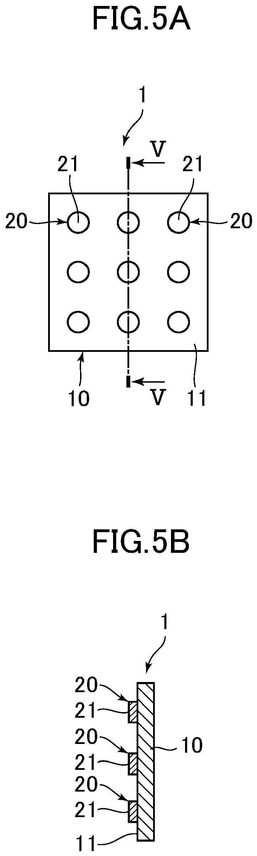

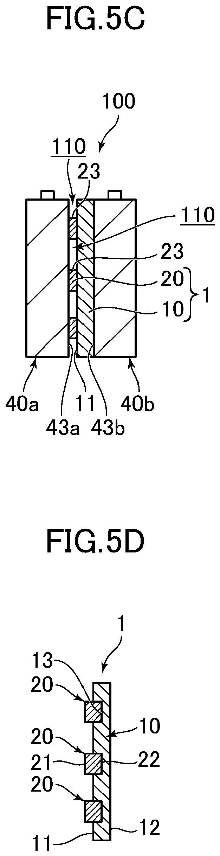

FIG. 5A is a view for schematically illustrating an example of the heat insulating material 1 in this case in plan view. FIG. 5B is a view for schematically illustrating an example of a cross section of the heat insulating material 1 taken along the line V-V of FIG. 5A. FIG. 5C is a view for schematically illustrating a cross section of the battery 100 including the heat insulating material 1 illustrated in FIG. 5A and FIG. 5B. In the example illustrated in FIG. 5A to FIG. 5C, the buffering portions 20 form a plurality of island portions (i.e., nine island portions) and the heat insulating portion 10 forms a sea portion.

When the heat insulating material 1 has the above-mentioned sea-island structure, at least part of the buffering portion 20 may be formed so as to protrude from the surface of the heat insulating portion 10 facing the surface included in the battery 100 toward the surface of the battery 100.

That is, in the example illustrated in FIG. 5C, the plurality of island portions formed by the buffering portions 20 are each formed so as to protrude from the surface 11 of the heat insulating portion 10 facing the surface 43a of the one cell 40a toward the surface 43a of the cell 40a.

Moreover, when the buffering portion 20 forms the plurality of island portions each protruding from the surface of the heat insulating portion 10 as described above, a gap is formed, in the battery 100 in which the heat insulating material 1 is arranged, between the surface included in the battery 100 and the surface of the heat insulating portion 10 (the surface forming the sea portion), which are spaced apart from each other with the plurality of island portions.

That is, in the battery 100 illustrated in FIG. 5C, a gap 110 is formed between the surface 43a of one cell 40a and the surface 11 of the heat insulating portion 10 of the heat insulating material 1 (i.e., a part of the surface 11 of the heat insulating portion 10 between two island portions adjacent to each other), which are spaced apart from each other with the plurality of island portions formed by the buffering portions 20.

In this regard, for example, in the example illustrated in FIG. 5C, when the surface 43a expanding due to excessive heat generation of the one cell 40a presses the buffering portions 20 of the heat insulating material 1 during the operation of the battery 100, the plurality of island portions formed by the buffering portion 20 are easily deformed by compression by causing part thereof to protrude into the gap 110 (more specifically, by causing the side surface 23 of each island portion to protrude into the gap 110).

In the heat insulating material 1, the entirety of the buffering portions 20 may be arranged at a position closer to the surface included in the battery 100 than the heat insulating portion 10. That is, in the example illustrated in FIG. 5B, the buffering portion 20 is stacked on the heat insulating portion 10. Specifically, the buffering portion 20 is stacked on the flat surface 11 of the heat insulating portion 10.

Meanwhile, for example, as illustrated in FIG. 5D, the buffering portion 20 may be arranged at a recess 13 formed in the surface 11 of the heat insulating portion 10. Also in this example, the buffering portion 20 is stacked on the heat insulating portion 10. However, only part of the buffering portion 20 (a protruding portion from the surface 11 of the heat insulating portion 10) is arranged at a position closer to the surface included in the battery 100 (the surface 43a of one cell 40a) than the heat insulating portion 10.

Moreover, the surface 22 of the buffering portion 20 on a side opposite to the surface 21 of the protruding portion thereof is arranged at a position farther from the surface included in the battery 100 (the surface 43a of one cell 40a) than the surface 11 of the heat insulating portion 10.

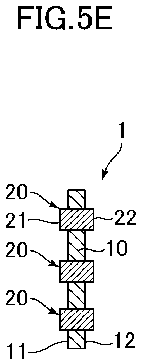

In addition, as illustrated in FIG. 5E, the buffering portion 20 may be arranged so as to penetrate through the heat insulating portion 10. Also in this example, only part of the buffering portion 20 is arranged at a position closer to the surface included in the battery 100 than the heat insulating portion 10.

That is, for example, when the heat insulating material 1 illustrated in FIG. 5E is applied to the battery 100 illustrated in FIG. 5C, part of the buffering portion 20 of the heat insulating material 1 (e.g., part of one surface 21 of the buffering portion 20) is arranged at a position closer to the surface 43a of one cell 40a than the heat insulating portion 10, and another part of the buffering portion 20 (e.g., part of the other surface 21 of the buffering portion 20) is arranged at a position closer to the surface 43b of the other cell 40b than the heat insulating portion 10.

When the heat insulating portion 10 and the buffering portion 20 are formed so as to form the sea-island structure in plan view of the heat insulating material 1, part or the entirety of the buffering portion 20 may be formed in a grid shape in plan view of the heat insulating material 1.

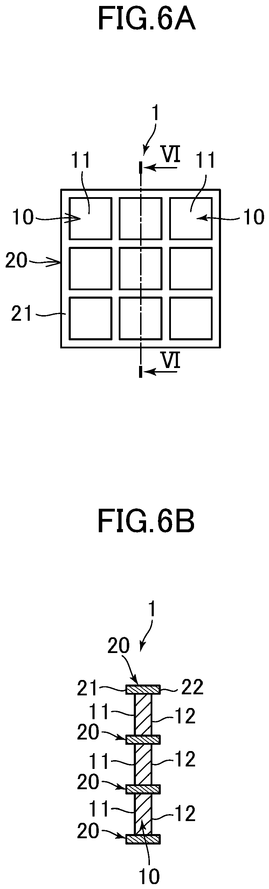

FIG. 6A is a view for schematically illustrating an example of the heat insulating material 1 in this case in plan view. FIG. 6B is a view for schematically illustrating an example of a cross section of the heat insulating material 1 taken along the line VI-VI of FIG. 6A. In the example illustrated in FIG. 6A and FIG. 6B, the buffering portion 20 is formed in a grid shape protruding from the surface 11 of the heat insulating portion 10. That is, in this example, the buffering portion 20 forms a sea portion in a grid shape, and the heat insulating portions 10 form a plurality of island portions corresponding to a plurality of grid holes. Specifically, the heat insulating material 1 includes: the buffering portion 20 in a grid shape; and the heat insulating portion 10 packed in the grid holes of the buffering portion 20.

In the example illustrated in FIG. 6B, part of the buffering portion 20 (e.g., one surface 21 of the buffering portion 20) is formed in a grid shape so as to protrude from one surface 11 of the heat insulating portion 10, and another part of the buffering portion 20 (e.g., the other surface 22 of the buffering portion 20) is formed in a grid shape so as to protrude from the other surface 12 of the heat insulating portion 10. In addition, the sea portion in a grid shape formed by the buffering portion 20 penetrates through the heat insulating portions 10.

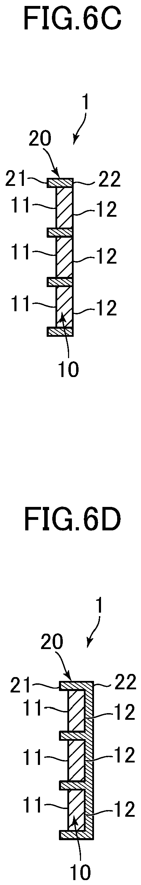

FIG. 6C is a view for schematically illustrating another example of the cross section of the heat insulating material 1 taken along the line VI-VI of FIG. 6A. In this example, part of the buffering portion 20 (e.g., one surface 21 of the buffering portion 20) is formed in a grid shape so as to protrude from one surface 11 of the heat insulating portion 10, but another part of the buffering portion 20 (e.g., the other surface 22 of the buffering portion 20) is prevented from protruding from the other surface 12 of the heat insulating portion 10.

FIG. 6D is a view for schematically illustrating still another example of the cross section of the heat insulating material 1 taken along the line VI-VI of FIG. 6A. In this example, part of the buffering portion 20 (e.g., one surface 21 of the buffering portion 20) is formed in a grid shape so as to protrude from one surface 11 of the heat insulating portion 10, and another part of the buffering portion 20 (e.g., the other surface 22 of the buffering portion 20) is formed so as to cover the entirety of the other surface 12 of each of the heat insulating portions 10.

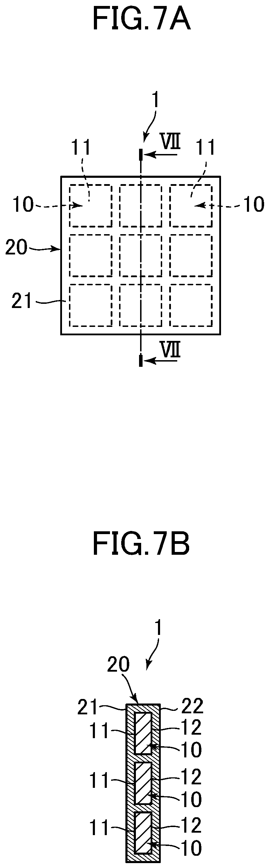

FIG. 7A is a view for schematically illustrating another example of the heat insulating material 1 in which part of the buffering portion 20 is formed in a grid shape in plan view. FIG. 7B is a view for schematically illustrating an example of a cross section of the heat insulating material 1 taken along the line VII-VII of FIG. 7A.

In the example illustrated in FIG. 7A and FIG. 7B, part of the buffering portion 20 (e.g., one surface 21 of the buffering portion 20) is formed so as to cover one surface 11 of the heat insulating portions 10, another part of the buffering portion 20 (e.g., the other surface 22 of the buffering portion 20) is formed so as to cover the other surface 12 of the heat insulating portion 10, and still another part of the buffering portion 20 is formed in a grid shape penetrating through the heat insulating portions 10.

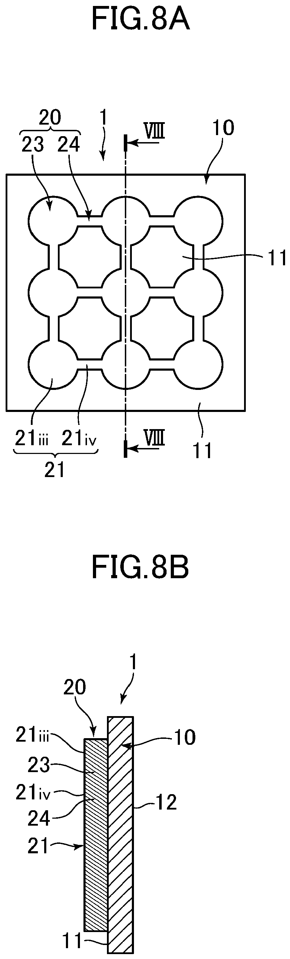

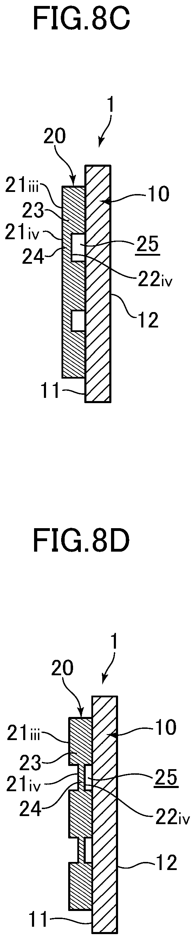

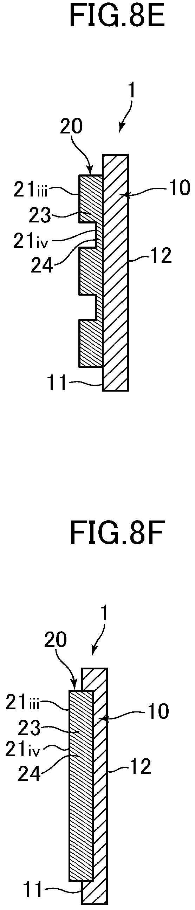

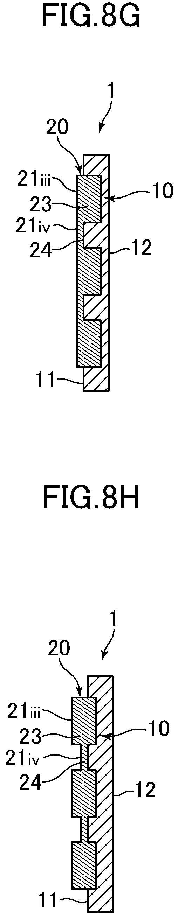

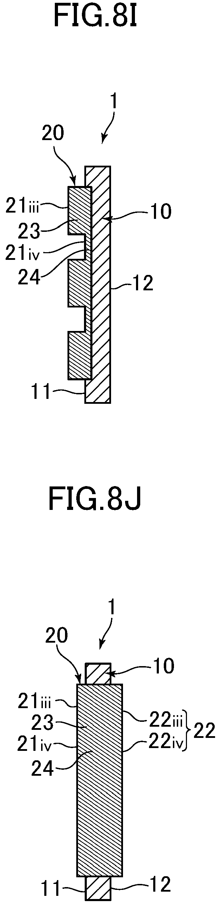

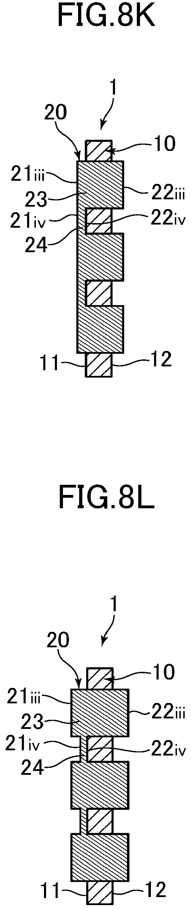

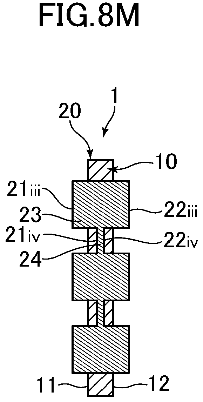

FIG. 8A is a view for schematically illustrating still another example of the heat insulating material 1 including the buffering portion 20 in a grid shape in plan view. FIG. 8B, FIG. 8C, FIG. 8D, FIG. 8E, FIG. 8F, FIG. 8G, FIG. 8H, FIG. 81, FIG. 8J, FIG. 8K, FIG. 8L, and FIG. 8M are each a view for schematically illustrating an example of a cross section of the heat insulating material 1 taken along the line VIII-VIII of FIG. 8A.

In the example illustrated in FIG. 8A, the heat insulating material 1 includes, in plan view thereof, the buffering portion 20 in a grid shape surrounded by part of the surface 11 of the heat insulating portion 10, and another part of the surface 11 of the heat insulating portion 10 is arranged at positions of grid holes of the buffering portion 20.

In addition, the buffering portion 20 in a grid shape includes: a plurality of node portions 23; and a plurality of connection portions 24 each of which connects two node portions adjacent to each other among the plurality of node portions 23. The node portions 23 are each a portion that is arranged at the position of an intersection point between two or more connection portions 24 and is wider than the connection portions 24. The node portions 23 are each connected to one or more other node portions 23 via the connection portions 24. As a result, the buffering portion 20 is formed as one grid-shaped body in which the plurality of node portions 23 and the plurality of connection portions 24 are integrated with each other.

In each of the examples illustrated in FIG. 8B to FIG. 8M, at least part of the buffering portion 20 is formed so as to protrude from the surface 11 of the heat insulating portion 10. That is, in each of the examples illustrated in FIG. 8B to FIG. 8E, the entirety of the buffering portion 20 is formed so as to protrude from the surface 11 of the heat insulating portion 10, and in each of the examples illustrated in FIG. 8F to FIG. 8M, part of the buffering portion 20 is formed so as to protrude from the surface 11 of the heat insulating portion 10.

In addition, in each of the examples illustrated in FIG. 8J to FIG. 8M, part of the buffering portion 20 is formed so as to protrude from one surface 11 of the heat insulating portion 10, and another part of the buffering portion 20 is formed so as to protrude from the other surface 12 of the heat insulating portion 10. Further, in each of the examples illustrated in FIG. 8J to FIG. 8M, still another part of the buffering portion 20 penetrates through the heat insulating portion 10.

Accordingly, in each of the examples illustrated in FIG. 8B to FIG. 8M, at least part of the buffering portion 20 is arranged at a position closer to the surface of the battery (e.g., the surface 43a of one cell 40a and/or the surface 43b of the other cell 40b in the battery 100 illustrated in FIG. 5C) than the heat insulating portion 10. More specifically, at least part of one surface 21 of the buffering portion 20 is arranged at a position closer to the surface of the battery (e.g., the surface 43a of one cell 40a in the battery 100 illustrated in FIG. 5C) than one surface 11 of the heat insulating portion 10, and/or at least part of the other surface 22 of the buffering portion 20 is arranged at a position closer to the surface of the battery (e.g., the surface 43b of the other cell 40b in the battery 100 illustrated in FIG. 5C) than the other surface 12 of the heat insulating portion 10.

In each of the examples illustrated in FIG. 8B, FIG. 8C, FIG. 8F, FIG. 8G, FIG. 8J, and FIG. 8K, in sectional view of the heat insulating material 1, surfaces 21ᵢᵢᵢ of the node portions 23 and surfaces 21ᵢᵥ of the connection portions 24 of the buffering portion 20 are connected to each other so as to form the same flat surface 21 of the buffering portion 20. In particular, in the example illustrated in FIG. 8J, in sectional view of the heat insulating material 1, while one surface 21ᵢᵢᵢ of each of the node portions 23 and one surface 21ᵢᵥ of each of the connections portions 24 of the buffering portion 20 form one same flat surface 21 of the buffering portion 20, the other surface 22ᵢᵢᵢ of each of the node portions 23 and the other surface 22ᵢᵥ of each of the connection portions 24 form the other same flat surface 22 of the buffering portion 20.

Meanwhile, in each of the examples illustrated in FIG. 8D, FIG. 8E, FIG. 8H, FIG. 8I, FIG. 8L, and FIG. 8M, one surface 21ᵢᵢᵢ of each of the node portions 23 of the buffering portion 20 is arranged at a position closer to the surface of the battery (e.g., the surface 43a of one cell 40a in the battery 100 illustrated in FIG. 5C) than one surface 21ᵢᵥ of each of the connection portions 24. In addition, in each of the examples illustrated in FIG. 8K, FIG. 8L, and FIG. 8M, the other surface 22ᵢᵢᵢ of each of the node portions 23 of the buffering portion 20 is arranged at a position closer to the surface of the battery (e.g., the surface 43b of the other cell 40b in the battery 100 illustrated in FIG. 5C) than the other surface 22ᵢᵥ of each of the connection portions 24.

In each of the examples illustrated in FIG. 8C and FIG. 8D, the gap 25 is formed between each of the connection portions 24 of the buffering portion 20 and the heat insulating portion 10 (i.e., between the surface 11 of the heat insulating portion 10 and each of the surfaces 22ᵢᵥ of the connection portions 24 facing the surface 11 of the heat insulating portion 10).

The shapes of each island portion (e.g., the island portion formed by the buffering portion 20 in the example illustrated in FIG. 4A, the plurality of island portions formed by the buffering portions 20 in the example illustrated in FIG. 5A, and the plurality of island portions formed by the heat insulating portions 10 and corresponding to the plurality of grid holes in each of the examples illustrated in FIG. 6A, FIG. 7A, and FIG. 8A) and the node portions 23 of the buffering portion 20 in plan view of the heat insulating material 1 are not particularly limited, and may each be a polygonal shape, a circular shape, an elliptic shape, or any other shape.

In addition, when the plurality of island portions and/or the plurality of node portions 23 of the buffering portion 20 are formed, the shapes of the plurality of island portions and/or the plurality of node portions 23 in plan view of the heat insulating material 1 may be the same as or entirely or partially different from one another. In addition, the plurality of island portions and/or the plurality of node portions 23 of the buffering portion 20 are formed, the sizes of the plurality of island portions and/or the plurality of node portions 23 in plan view of the heat insulating material 1 may be the same as or entirely or partially different from one another.

The number of the island portions in plan view of the heat insulating material 1 is not limited to 1 (FIG. 4A) or 9 (FIG. 5A, FIG. 6A, and FIG. 7A), and is not particularly limited as long as the number of the island portions is 1 or more. When the buffering portion 20 in a grid shape includes the node portions 23 and the connection portions 24, the number of the node portions 23 is not limited to 9 (FIG. 8A), and is not particularly limited as long as the number of the node portions 23 is 2 or more. In addition, in this case, the number of the connection portions 24 is not particularly limited as long as the number of the connection portions 24 is 1 or more. In addition, the heat insulating material 1 may include two or more buffering portions 20 each including two or more node portions 23 and one or more connection portions 24 in plan view thereof.

In addition, the thicknesses of the heat insulating portion 10 and the buffering portion 20 may each be uniform or non-uniform in their entirety. That is, for example, as illustrated in each of FIG. 6A, FIG. 7A, and FIG. 8A, when the buffering portion 20 is formed in a grid shape, the thickness of the buffering portion 20 may be uniform or non-uniform.

In addition, the surface included in the battery serving as a heat insulation target of the heat insulating material 1 (a surface to be covered with the heat insulating material 1) is not limited to the surfaces of the pair of cells arranged adjacent to each other and facing each other, and is not particularly limited as long as the surface is a surface for which heat insulation (including heat retention) is required, such as a surface of another member included in the battery or an outer surface of the battery.

## Claims

1. A heat insulating material for a battery, which is arranged so as to cover a surface included in a battery,
the heat insulating material for a battery comprising:
a heat insulating portion that is arranged so as to face the surface of the battery; and
a buffering portion that is more deformable by compression than the heat insulating portion,
wherein at least part of the buffering portion is arranged at a position closer to the surface of the battery than the heat insulating portion.

2. The heat insulating material for a battery according to claim 1, wherein a compressive modulus of elasticity of the buffering portion is smaller than that of the heat insulating portion.

3. The heat insulating material for a battery according to claim 1 or 2, wherein a compressive stress of the buffering portion under compressive strain of 10% is smaller than that of the heat insulating portion.

4. The heat insulating material for a battery according to any one of claims 1 to 3, wherein a thermal conductivity at 23°C of the heat insulating portion is smaller than that of the buffering portion.

5. The heat insulating material for a battery according to any one of claims 1 to 4, wherein the heat insulating portion and the buffering portion are arranged so as to form a sea-island structure in plan view of the heat insulating material.

6. The heat insulating material for a battery according to any one of claims 1 to 5, wherein the heat insulating portion is a porous body.

7. The heat insulating material for a battery according to claim 6, wherein the heat insulating portion is a press-formed body of powder.

8. The heat insulating material for a battery according to claim 6, wherein the heat insulating portion is a fiber body.

9. The heat insulating material for a battery according to any one of claims 1 to 8, wherein the buffering portion is a fiber body.

10. The heat insulating material for a battery according to any one of claims 1 to 8, wherein the buffering portion is an elastomer formed body.

11. The heat insulating material for a battery according to any one of claims 1 to 8, wherein the buffering portion is a metal spring.

12. A battery, comprising the heat insulating material of any one of claims 1 to 11.

13. The battery according to claim 12, comprising a pair of cells arranged adjacent to each other,
wherein the heat insulating material is arranged between the pair of cells.
